# EUROPEAN PATENT APPLICATION

(11) **EP 3 264 291 A1**
(43) Date of publication of application: **03.01.2018**
(21) Application number: 16754748.8
(22) Date of filing: 05.02.2016
(51) Int. Cl.: G06F 17/30

(54) **DATA BLOCK PROCESSING METHOD AND DEVICE**

(30) Priority: 27.02.2015 CN 201510090139
(71) Applicant: Alibaba Group Holding Limited, Grand Cayman (KY)
(72) Inventor: RAO, Zhitao, Hangzhou Zhejiang 311121 (CN)
(74) Representative: Boult Wade Tennant
(86) International application number: PCT/CN2016/073594
(87) International publication number: WO 2016/134639

(57) **Abstract**

Disclosed is a method and a device for processing data blocks. The method comprises: when a control server receives a log including tablet data block information that is sent by a storage server, acquiring the tablet data block information included in the log; querying a merge server for tablet data block information in a root table; determining whether the tablet data block information included in the log is consistent with the tablet data block information in the root table; summarizing and storing the tablet data block information included in the log and the tablet data block information in the root table; and sending an alarm if the determination result is that the tablet data block information included in the log is inconsistent with the tablet data block information in the root table. Through the disclosed embodiments, it is possible to track the status of change of tablet data blocks and check the tablet data blocks efficiently and accurately.

## Description

### CROSS-REFERENCE TO RELATED APPLICATION

This application claims the benefit of priority of Chinese Application No. CN201510090139.4, titled "Method and Equipment for Processing Data Blocks," filed on February 27, 2015, and PCT Application No. PCT/CN2016/073594, titled "Method and Equipment for Processing Data Blocks" filed on February 4, 2016, the disclosure of each is hereby incorporated by reference in their entirety.

### BACKGROUND

### Technical Field

The disclosed embodiments relate to the field of communications technologies, and in particular, to a method for processing data blocks in a distributed database and a device for processing data blocks in a distributed database.

### Description of the Related Art

With improvements in cloud computing, traditional databases have faced increasingly difficulties in supporting big data associated with cloud computing. Due to these difficulties, distributed databases have developed rapidly. As an important component of cloud computing systems, distributed database technologies have matured and will be widely used in various industries in the future to provide businesses with low-cost, easily-extensible, and highly-available data storage solutions.

One distributed database, OCEANBASE, is a current mainstream distributed database, similar to other distributed databases in that the implementation of an OCEANBASE storage engine also manages disks for tens of thousands of commodity PC servers. The disk in each OCEANBASE PC server is divided by the storage engine into storage blocks for storing data (e.g., logical data blocks, tablet data blocks, and the like). In an OCEANBASE database, one tablet data block may belong to only one table in the OCEANBASE database; and one table in the database may have multiple tablet data blocks depending on the amount of data stored in the table. That is, a many-to-one relationship exists between tablet data blocks and tables in an OCEANBASE database. Tablet data blocks, basic storage units of a storage engine of a distributed database, exist on a PC server in large numbers. In order to ensure a distributed database's high availability, a tablet data block may have many copies. In other words, the same data may exist in many tablet data blocks. Moreover, with data insertion, deletion, and updates over time (as well as load balancing needs of the distributed database system), a tablet data block is subject to complex operations such as splitting, migration, and merging. Failure of these operations leads to the loss of copies or inconsistency between data of copies. Due to the high complexity in large-scale distributed database systems, difficult problems related to data consistency, high system availability, and fault-tolerance of a partition, etc must be dealt with and managing a rational and correct distribution of tablet data blocks is therefore difficult.

As a result, by tracking the status of changes of tablet data blocks in real time, a detailed distribution of the tablet data blocks on disks of various PC servers can be obtained accurately, making it easy to analyze the rationality of the distribution of tablet data blocks on the disks of PC servers. It is also possible to give early warnings regarding the concentration of the tablet data blocks on certain PC servers or specific disks of PC servers so as to bring additional service value to a user. Distribution locations of tablet data blocks in each table will also be identified accurately so as to obtain the changing status of the tablet data blocks in each table during its lifetime and provide additional service value to the user. The overall data storage of the distributed database can be monitored comprehensively and a storage location of a data segment can be found precisely so as to bring additional service value to the user. In addition to the above benefits, real-time tracking of the changing status of tablet data blocks in the distributed database can bring many other benefits. By performing relevant checks on tablet data blocks that are obtained in real time in the distributed database, alarms can be sent based on data inconsistencies found in tablet data blocks to provide a basis for subsequent automatic or manual processing, preventing disorder or loss of tablet data blocks caused by a program bug. Program bugs can also be reported to a developer of the distributed database for resolution, thereby further improving the stability and high availability of the distributed database.

Currently, there is no ready-made method for tracking tablet data blocks in an OCEANBASE database. Tracking is generally performed by manually searching the OCEANBASE database for a root table to acquire data of tablet data blocks when loss of tablet data blocks or inconsistency of tablet data blocks occurs or is otherwise manually detected. In current systems, tablet data block information of various tables is acquired manually from the OCEANBASE root table system table when loss of tablet data blocks or inconsistency of tablet data blocks occurs or is otherwise detected. The tablet data block information of the tables stored in the OCEANBASE root table is merely the latest tablet data block information. In other words, existing systems can only acquire a current status data of tablet data blocks, but cannot track the changing status of the tablet data blocks over time.

Existing methods of checking tablet data blocks comprise manually traversing storage server logs of the OCEANBASE to acquire logs related to tablet data blocks; integrating information of these logs, and then comparing such information with related data of tablet data blocks of a corresponding table in an OCEANBASE root table system table. Manually traversing the storage server logs of OCEANBASE has the disadvantage of being extremely inefficient. In addition, in order to prevent a large amount of disk space from being occupied by log files, OCEANBASE periodically cleans log files stored prior to specific time points. Because the logs are cleaned (e.g., deleted), log data of the tablet data blocks acquired by manually traversing the storage server logs of the OCEANBASE becomes incomplete, which might lead to inaccurate checking results.

In sum, current systems cannot track the changing status of tablet data blocks over time and checking tablet data blocks in current systems has the disadvantage of extreme inefficiency and inaccurate results.

### BRIEF SUMMARY

Embodiments of the disclosure provide a method and a device for processing data blocks, which can track the changing status of tablet data blocks in real time and check tablet data block information efficiently and accurately.

In one embodiment, a method for processing data blocks, applied to a system comprising a storage server, a control server, and a merge server, is provided comprising: when the control server receives a log including tablet data block information sent by the storage server, acquiring, by the control server, the tablet data block information included in the log; querying, by the control server, the merge server for tablet data block information in a corresponding root table according to the tablet data block information included in the log; determining, by the control server, whether the tablet data block information included in the log is consistent with the tablet data block information in the root table; and summarizing and storing, by the control server, the tablet data block information included in the log and the tablet data block information in the root table, and sending an alarm when the determining result indicates that the tablet data block information included in the log is inconsistent with the tablet data block information in the root table.

In one embodiment, querying, by the control server, the merge server for tablet data block information in a corresponding root table according to the tablet data block information included in the log comprises: identifying, by the control server, a table name corresponding to the tablet data block information included in the log; and querying, by the control server, the merge server for tablet data block information in the root table corresponding to the table name.

In one embodiment, determining, by the control server, whether the tablet data block information included in the log is consistent with the tablet data block information in the root table comprises: checking, by the control server, whether information corresponding to a tablet data block in the root table is consistent with a tablet data block included in the log, the information corresponding to a tablet data block in the root table comprising one or more of a table name, a boundary, a location distribution, a data check digit, and an index, a creation time, and a size; and when any inconsistency is found for any of the information corresponding to a tablet data block in the root table in the checking result, determining, by the control server, that the tablet data block information included in the log is inconsistent with the tablet data block information in the root table.

In one embodiment, summarizing and storing, by the control server, the tablet data block information included in the log and the tablet data block information in the root table comprises: summarizing, by the control server, the tablet data block information included in the log and the tablet data block information in the root table; and persistently saving, by the control server, summarized tablet data block information on a disk using table names corresponding to tablet data blocks as key values.

One embodiment of the disclosure provides a method for processing data blocks, applied to a system comprising a storage server, a control server, and a merge server, the method comprising the following steps: polling, by the storage server, one or more logs; when the storage server determines that new data appears in the logs, identifying whether the new data is tablet data block information; and if positive, sending, by the storage server, a log including the tablet data block information to the control server, so that the control server identifies consistency between the tablet data block information included in the log and tablet data block information in a root table of the merge server (or in one of a plurality of root tables distributed across multiple devices), and summarizes and stores the information.

One embodiment of the disclosure provides a control server, applied to a system comprising a storage server, a control server, and a merge server, wherein the control server comprises: a receiving module, configured to receive a log including tablet data block information that is sent by the storage server; an acquisition module, configured to acquire the tablet data block information included in the log when the receiving module receives the log including tablet data block information that is sent by the storage server; a querying module, configured to query the merge server for tablet data block information in a corresponding root table according to the tablet data block information included in the log that is acquired by the acquisition module; a determination module, configured to determine whether the tablet data block information included in the log that is acquired by the acquisition module is consistent with the tablet data block information in the root table that is found by the querying module; and a processing module, configured to summarize and store the tablet data block information included in the log that is acquired by the acquisition module and the tablet data block information in the root table that is found by the querying module, and send an alarm when the determining result indicates that the tablet data block information included in the log is inconsistent with the tablet data block information in the root table.

In one embodiment, the querying module is specifically configured to: determine a table name corresponding to the tablet data block information included in the log that is acquired by the acquisition module; and query the merge server for tablet data block information in a root table corresponding to the table name.

In one embodiment, the determination module is further configured to: check whether information corresponding to a tablet data block in the root table that is found by the querying module is consistent with a tablet data block included in the log that is acquired by the acquisition module, the information corresponding to a tablet data block in the root table comprising one or more of a table name, a boundary, a location distribution, a data check digit, and an index, a creation time, and a size; and when any inconsistency is found for any of the information in the checking result, determine that the tablet data block information included in the log that is acquired by the acquisition module is inconsistent with the tablet data block information in the root table that is found by the querying module.

In one embodiment, the processing module is further configured to: summarize the tablet data block information included in the log that is acquired by the acquisition module and the tablet data block information in the root table that is found by the querying module; and persistently save summarized tablet data block information on a disk using table names corresponding to tablet data blocks as key values.

One embodiment of the disclosure provides a storage server, applied to a system comprising a storage server, a control server, and a merge server, wherein the storage server comprises: a polling module, configured to poll logs of the storage server; an identification module, configured to, when the polling module determines that new data appears in the logs, identify whether the new data is tablet data block information; and a sending module, configured to, when an identification result of the identification module is positive, send a log including the tablet data block information to the control server, so that the control server identifies consistency between the tablet data block information included in the log and tablet data block information in a root table of the merge server (or in one of a plurality of root tables distributed across multiple devices), and summarizes and stores the information.

As compared with current systems, the disclosed embodiments have at least the following advantages: changing status data of tablet data blocks of various tables over time can be acquired in real time; the acquired data is persistently stored on a disk; and a status change graph of the tablet data blocks of the tables during the lifetime can be drawn according to the data persistently stored on the disk, thereby achieving the effect of keeping track of the status change of the tablet data blocks. In the disclosed embodiments, relevant checking can be performed in real time on tablet data blocks in various tables in a database according to the obtained information relevant to tablet data blocks. Early warnings for tablet data blocks disorder and loss caused by a program bug can be sent efficiently and accurately in real time, thereby overcoming the problems existing in current systems, namely, the disadvantages of extremely low efficiency and inaccurate checking results.

### BRIEF DESCRIPTION OF THE DRAWINGS

In order to more clearly illustrate the technical solutions in the disclosed embodiments, drawings describing the embodiments are introduced briefly below. The drawings described below are merely some of the disclosed embodiments, and those of ordinary skill in the art can also obtain other drawings according to these drawings in the depicted embodiments without making creative efforts.
FIG. 1 is a structural diagram of a database according to some embodiments of the disclosure.
FIG. 2 is a flow diagram of a method for processing data blocks according to some embodiments of the disclosure.
FIG. 3 is a flow diagram of a method for processing data blocks according to some embodiments of the disclosure.
FIG. 4A is a flow diagram of a storage server log parsing daemon according to some embodiments of the disclosure.
FIG. 4B is a flow diagram illustrating working of a control server according to some embodiments of the disclosure.
FIG. 5 is a structural diagram of a device for processing data blocks of a database according to some embodiments of the disclosure.
FIG. 6 is a structural diagram of a device for processing data blocks of a database according to some embodiments of the disclosure.

### DETAILED DESCRIPTION

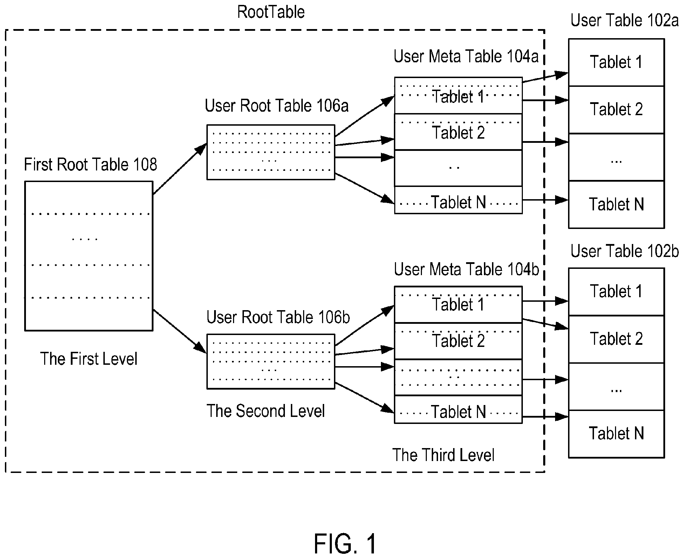

In order to illustrate the problems existing in current systems more clearly, FIG. 1 illustrates a structural diagram of a database, wherein the database may be, for example, an OCEANBASE database. FIG. 1 illustrates a specific application scenario in which a database uses a fixed, three-level structure to store its logical data block (i.e., a tablet data block) location information and other metadata for each table in the database. The three levels of tables together constitute all root tables of the system. In some embodiments, root tables may be distributed across a number of computing devices or servers.

FIG. 1 illustrates user tables (102a, 102b), which do not belong to root tables. Each user table is split into multiple tablets during daily merging, according to a preconfigured size. Each tablet stores some of the user table data, and all tablet fragments constitute all of the data of the entire user table.

FIG. 1 additionally illustrates metadata tables of user tables, which are referred to as user meta tables (104a, 104b). Each user table (102a, 102b) corresponds to one user meta table (104a, 104b), wherein one data row in the user meta table corresponds to one tablet in the user table. The data row stores information such as a boundary value, a location distribution, a check value, and an index of the tablet of the user table. The user meta table may be split into multiple tablets (104a, 104b) during daily merging according to a preconfigured size. Additionally, each tablet in the user meta tables (104a, 104b) stores some of the user meta table data.

FIG. 1 additionally illustrates metadata tables of user meta tables, which are referred to as user root tables (106a, 106b). Each row, corresponding to one tablet on the third level (i.e., the level including the user meta tables (104a, 104b), stores information such as a boundary value, a location distribution, a check value, an of the tablet of the user meta table. The user root table (106a, 106b) has only one tablet, which is not allowed to be split.

FIG. 1 additionally illustrates an entry to all user root tables, which is referred to as a first root table (108). Each row, corresponding to a user root table (106a, 106b) on the second level, stores information including a boundary, a location distribution, a check value, and an index of a tablet belonging to the user root table. The first root table (108) has only one tablet, which is not allowed to be split.

In an OCEANBASE database, a tablet data block may have many copies. In other words, the same data may exist in many tablet data blocks. Moreover, with data insertion, deletion, and updates over time (as well as load balancing needs of the distributed database system), a tablet data block undergoes complex operations such as splitting, migration, and merging. Failure of these operations leads to the loss of copies or inconsistency between data of copies. Therefore, by tracking the changing status of tablet data blocks in real time, it is possible to keep track of the status of the tablet data blocks over time. Relevant checking can be performed in real time on tablet data blocks in various tables in the OCEANBASE database according to obtained information relevant to the tablet data blocks. Early warnings for tablet data blocks disorder and loss caused by a program bug can be sent efficiently and accurately in real time.

Nevertheless, current systems cannot track the changing status of tablet data blocks over time, and current techniques for checking tablet data blocks have the disadvantages of extremely low efficiency and inaccurate results. In order to overcome the problems in current systems, the disclosure provides the following embodiments described herein.

In a first embodiment, in order to overcome the disadvantages that current systems cannot keep track of the changing status of tablet data blocks over time, and have extremely low checking efficiency and inaccurate checking results, the disclosure provides a method for processing data blocks.

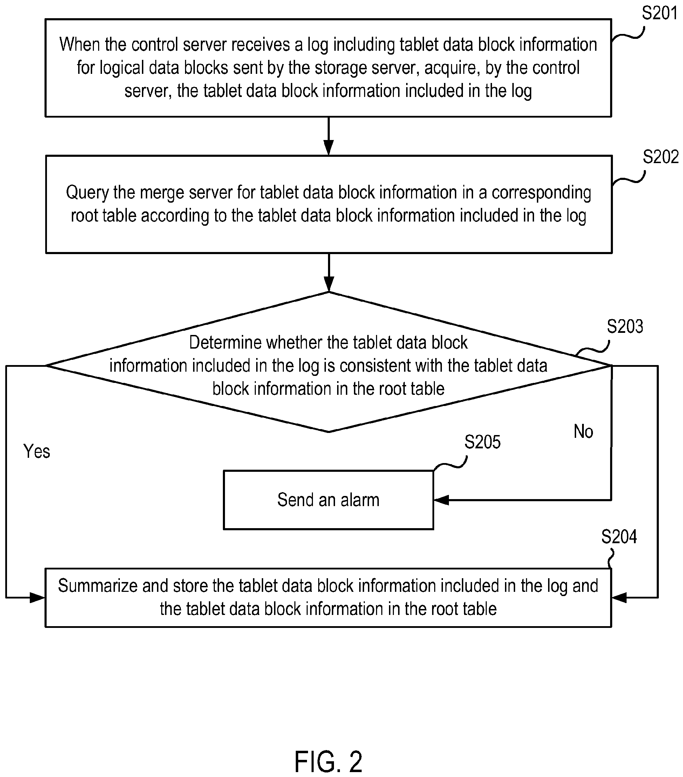

FIG. 2 is a flow diagram of a method for processing data blocks according to some embodiments of the disclosure. The embodiment illustrated in FIG. 2 may be applied in a system including a storage server, a control server, and a merge server. In the illustrated embodiment, the following steps may be performed at a control server. In one embodiment, the storage server, control server, and merge server each may comprise a device including a processor and a non-transitory memory storing computer-executable instructions therein that, when executed by the processor, cause the device to perform some or all of the disclosed methods.

**Step S201:** When the control server receives a log including tablet data block information for logical data blocks sent by the storage server, acquire, by the control server, the tablet data block information included in the log.

In one embodiment, step S201 includes receiving, by the control server, a log including tablet data block information that is reported by the storage server; parsing the log; and extracting the tablet data block information corresponding to the log.

The tablet data block information includes, but is not limited to, one or more of the following information: a table name corresponding to a tablet data block, a boundary corresponding to a tablet data block, a location distribution of a tablet data block, a data check code of a tablet data block, an index of a tablet data block, a creation time of a tablet data block, and a size of a tablet data block.

**Step S202:** query the merge server for tablet data block information in a corresponding root table according to the tablet data block information included in the log.

In one embodiment, step S202 includes identifying, by the control server, a table name corresponding to the tablet data block information included in the log; and querying, by the control server, the merge server for tablet data block information in the root table corresponding to the table name.

**Step S203:** determine whether the tablet data block information included in the log is consistent with the tablet data block information in the root table.

In one embodiment, step S203 specifically includes: checking, by the control server, whether the information corresponding to a tablet data block in the root table is consistent with a tablet data block included in the log, the information corresponding to a tablet data block in the root table comprising one or more of a table name, a boundary, a location distribution, a data check code, and an index, a creation time, and a size.

When any inconsistency is found for any of the information in the checking result of step S203, the method may comprise determining, by the control server, that the tablet data block information included in the log is inconsistent with the tablet data block information in the root table.

On the other hand, when consistency is found for any of the information in the checking result of step S203, the method determines that the tablet data block information included in the log is consistent with the tablet data block information in the root table.

In one embodiment, the following step S204 is performed no matter whether the determination result is positive or negative (e.g., whether the tablet data block information included in the log is consistent or inconsistent, respectively, with the tablet data block information in the root table). When the determination result is that the tablet data block information included in the log is inconsistent with the tablet data block information in the root table, a further step of S205 needs to be performed.

**Step S204:** summarize and store the tablet data block information included in the log and the tablet data block information in the root table. In one embodiment, step S204 includes persistently saving the summarized tablet data block information on a disk using table names corresponding to tablet data blocks as key values.

**Step S205:** send an alarm. In one embodiment, an alarm is sent to prompt the user that data block information is inconsistent and immediate processing may be necessary.

In view of the above, as compared with current systems, each time the status of a tablet data block changes, the acquired tablet data block information and found tablet data block information via query are summarized and persistently stored on a disk. It is therefore possible to keep track of the status change of the tablet data block. In disclosed embodiments, multi-dimensional checking is performed in real time for the obtained tablet data block information and tablet data block information in a root table. Early warnings will be sent in time when the checking result indicates that the obtained tablet data block information and the tablet data block information in the root table are inconsistent. A timely correction (either automatically or manually) may then be performed when tablet data block disorder and loss occur, thereby providing high checking efficiency and accurate checking results.

The above description describes embodiments of methods performed by a control server. Accordingly, the disclosure further describes an implementation of the aforementioned embodiments in the context of a storage server.

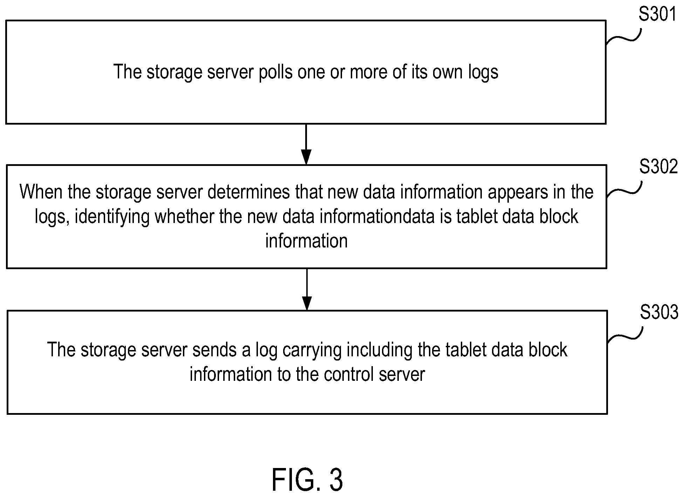

FIG. 3 is a flow diagram of a method for processing data blocks according to some embodiments of the disclosure. The illustrated method may be applied in a system including a storage server, a control server, and a merge server. The method includes the following steps performed by a storage server.

**Step S301:** The storage server polls one or more of its own logs.

In one embodiment, step S301 comprises: generating a piece of log data in one or more local log files at the storage server when splitting or merging of a tablet data block occurs on the storage server and continuously polling, by the storage server, the one or more local log files to further determine whether new data appears in the one or more local log files

**Step S302:** When the storage server determines that new data appears in the logs, identifying whether the new data is tablet data block information.

In one embodiment, step S302 comprises: when new data is generated in the log files of the storage server, acquiring the newly generated log data; parsing the newly generated log data; and identifying whether the new data is tablet data block information. If so, the method may perform step S303; and, if not, the method may return to step S301.

**Step S303:** The storage server sends a log including the tablet data block information to the control server.

After step S303, the control server identifies consistency between the tablet data block information included in the log and tablet data block information in a root table of the merge server (or in one of a plurality of root tables distributed across multiple devices), and summarizes and stores the information, thereby facilitating subsequent viewings of the changing status of tablet data blocks of a certain table in an OCEANBASE database during its lifetime and subsequent automatic processing or manual processing. Descriptions of the processes performed by the control server are described in detail supra and are not repeated herein for the sake of clarity.

In one embodiment, step S303 comprises when the newly generated log data contains a tablet data block log, reporting the tablet data block log to the control server; and then continuing reading log data generated by the storage server; and when no new log is generated or the generated log is not a tablet data block log, continuing reading log data generated by the storage server.

In one embodiment, a tablet log of the OCEANBASE is encapsulated according to a log protocol format defined by OCEANBASE. Information contained in the format includes information such as the time a tablet data block log is generated, a table name corresponding to the tablet data block, a boundary of the tablet data block, a check code of the tablet data block, and a location distribution of the tablet data block. In general, OCEANBASE uses a log to record information of a tablet data block because logs recorded to a disk have high reliability. This is similar to traditional databases using redo logs and undo logs to implement data storage because of the high reliability of the logs. When the splitting or merging action of a tablet data block in the OCEANBASE database ends, the OCEANBASE database generates a tablet log in the storage server where the tablet data block resides. The log is used for recording the detailed data of the corresponding tablet data block during the splitting or merging, including information such as a boundary, a location distribution, a check value, and an index of the tablet. A tablet log is generated in the following situations.

Tablet replication: when the number of copies of a certain tablet is less than a threshold, an OCEANBASE database selects one storage server containing the tablet copy as a migration source and another storage server meeting requirements as a migration destination. When the tablet copy is migrated from the migration source to the destination, a new tablet copy is generated at the destination. It is necessary to record the detailed information of the newly generated tablet in the storage server logs at the destination by means of a tablet log.

Load balancing: if the number of tablets of a certain table contained in a certain storage server exceeds a certain threshold, this storage server is then used as a migration source and another storage server meeting requirements is used as a migration destination. Some tablets of the table in the migration source are migrated to the destination. New tablet copies will also be generated at the destination; and it is also necessary to record the detailed information of the newly generated tablets in the storage server logs at the destination by means of tablet logs.

Tablet splitting: if the space of a certain tablet belonging to a certain table is not sufficient for newly inserted or modified data during daily merging, the tablet will need to be split into multiple tablets. The specific number of tablets that the tablet is split into is determined based on the data amount. While the old tablet is undergoing changing, the new tablets are being generated and it is necessary to record the detailed information of the tablets in storage server logs at the destination by means of tablet logs.

Tablet merging: if data in a certain tablet belonging to a certain table is completely deleted during daily merging, in order to efficiently use the disk space to the maximum extent, the tablet will be reclaimed by the OCEANBASE system. The tablet no longer belongs to the table and it is necessary to record the detailed information of the tablet in the storage server logs at the destination by means of a tablet log.

In view of the above, as compared with current systems, a log including tablet data block information can be acquired in real time in the disclosed embodiments. The control server will then be able to identify consistency between the tablet data block information included in the log and tablet data block information in a root table of the merge server (or in one of a plurality of root tables distributed across multiple devices), and summarize and store the information, thereby achieving the goal of status tracking and accurate checking of the tablet data block.

In order to further describe the technical solutions of the disclosed embodiments, a specific application scenario is provided below. This embodiment is specifically applied to a system including a storage server, a control server, and a merge server. In this embodiment, a log parsing daemon for storage servers is deployed on the storage server.

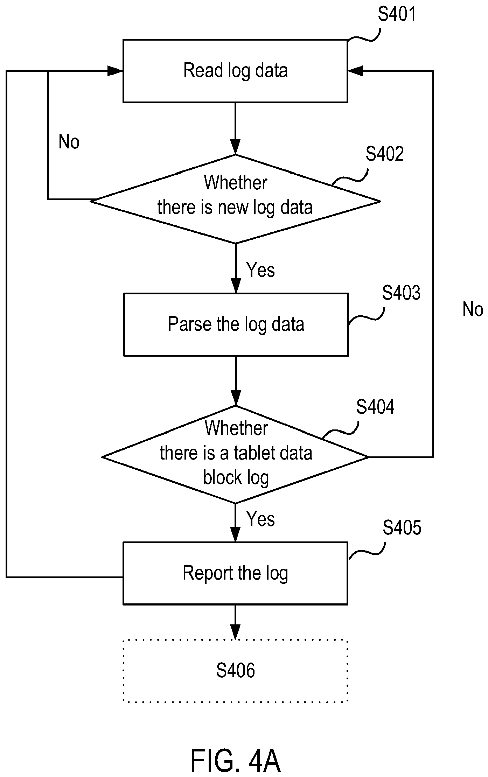

FIG. 4A is a flow diagram of a storage server log parsing daemon according to some embodiments of the disclosure The procedure of the log parsing daemon for the storage server is as follows.

**Step S401:** Upon startup, the log parsing daemon continuously polls log files generated by the storage server and reads log data.

**Step S402:** The log parsing daemon determines whether new log data is generated in the log files of the storage server.

If so, the method performs step S403; if not, the method returns to step S401.

**Step S403:** The log parsing daemon performs parsing to acquire new log data and parses the new log data.

**Step S404:** The log parsing daemon determines whether the new log data contains a log including tablet data block information.

**Step S405:** The log parsing daemon reports the log including the tablet data block information to the control server; and after the reporting ends, the log parsing daemon continues reading log data generated by the storage server.

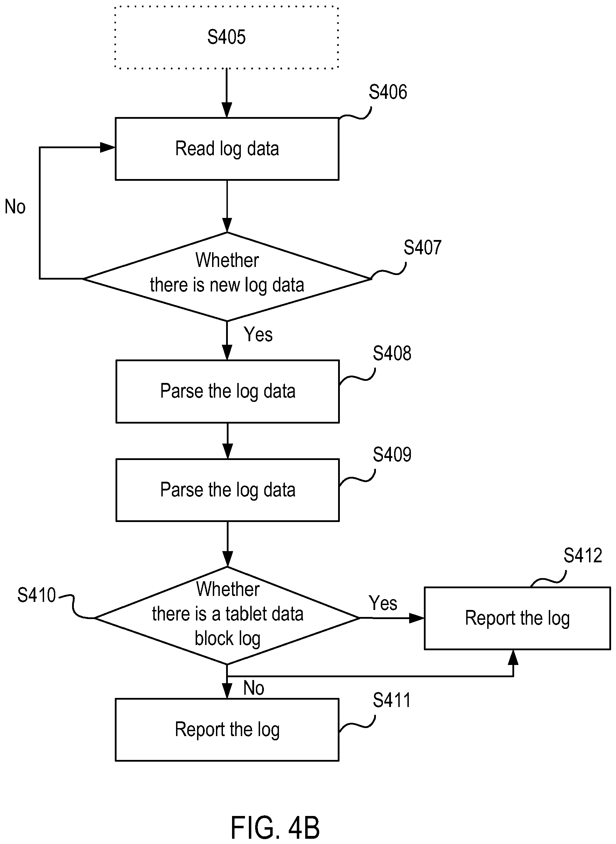

Further, after the log parsing daemon reports the log including the tablet data block information to the control server, the control server processes the log. As shown in FIG. 4B, the processing procedure of the control server is as follows.

**Step S406:** The control server continuously monitors the log including the tablet data block information that is reported from the storage server, wherein the tablet data block information includes, but is not limited to, one or more of the following information: a table name corresponding to a tablet data block, a boundary corresponding to a tablet data block, a location distribution of a tablet data block, a data check code of a tablet data block, an index of a tablet data block, a creation time of a tablet data block, and a size of a tablet data block.

**Step S407:** The control server determines whether a log including the tablet data block information that is reported by the storage server appears.

If so, the method performs step S408; if not, the method returns to step S406.

**Step S408:** The control server receives and parses the log including the tablet data block information that is reported by the storage server; extracts the tablet data block information corresponding to the log, wherein the tablet data block information includes, but is not limited to, one or more of the following information: a table name corresponding to a tablet data block, a boundary corresponding to a tablet data block, a location distribution of a tablet data block, a data check code of a tablet data block, an index of a tablet data block, a creation time of a tablet data block, and a size of a tablet data block.

**Step S409:** The control server identifies tablet data block information in a root table from the merge server according to a table name corresponding to a tablet data block, wherein every time a log is received, the tablet data block information in a root table is queried; and querying a root table for tablet data block information through the merge server comprises: connecting to the merge server by means of load balancing to execute a relevant SQL (Structured Query Language) statement to acquire the tablet data block information in the root table.

**Step S410:** The control server checks whether one or more of the following information corresponding to a tablet data block in the root table is consistent with a tablet data block included in the log: a table name, a boundary, a location distribution, a data check code, an index, a creation time, and a size.

When any inconsistency is found for any of the information in the checking result of step S410, determining, by the control server, that the tablet data block information included in the log is inconsistent with the tablet data block information in the root table.

On the other hand, when consistency is found for any of the information in the checking result of step S410, the control server determines that the tablet data block information included in the log is consistent with the tablet data block information in the root table.

In one embodiment, step S411 needs to be performed no matter whether the determined result of step S410 is positive or negative. When the determination is that the tablet data block information included in the log is inconsistent with the tablet data block information in the root table, a further step S412 needs to be performed.

**Step S411:** The control server summarizes and stores the tablet data block information included in the log and the tablet data block information in the root table. In one embodiment, step S411 comprises: summarizing, by the control server, the tablet data block information included in the log and the tablet data block information in the root table; and persistently saving, by the control server, the summarized tablet data block information on a disk using table names corresponding to tablet data blocks as key values, thereby facilitating subsequent viewings of the changing status of tablet data blocks of a certain table in an OCEANBASE database during its lifetime.

**Step S412:** The control server sends an alarm. An alarm is sent to prompt the user that data block information is inconsistent and immediate processing may be necessary, thereby facilitating any subsequent automatic processing or manual processing.

In view of the above, as compared with current systems, the disclosed embodiments overcome the problems that existing systems can only acquire current status data of a tablet data block and cannot keep track of the status change of the tablet data block. In the disclosed embodiments, a log including tablet data block information generated when a tablet data block changes is acquired and parsed in real time to obtain the tablet data block information; and in this embodiment, the acquired tablet data block information and the found tablet data block information through querying are summarized and persistently stored on a disk. Because the tablet data block information is persistently stored every time the status of the tablet data block changes, the status change of the tablet data block can be tracked. On the other hand, the disclosed embodiments overcome the problem in current systems that checking performed by a manual search has low efficiency as well as the possible inaccurate checking results due to the fact that the logs are periodically cleaned and the log data obtained via search is incomplete. In the disclosed embodiments, multi-dimensional checking is performed in real time on obtained tablet data block information and tablet data block information in a root table; early warnings are sent in time when the checking result is that the obtained tablet data block information and the tablet data block information in the root table are inconsistent. A timely correction can be performed when tablet data blocks disorder and loss occur, thereby resulting in high checking efficiency and accurate checking results. At the same time, because the obtained tablet data block information and the found tablet data block information in a root table via querying are summarized and persistently stored in this embodiment, complete data can then be obtained in subsequent checking, thereby improving checking accuracy and efficiency.

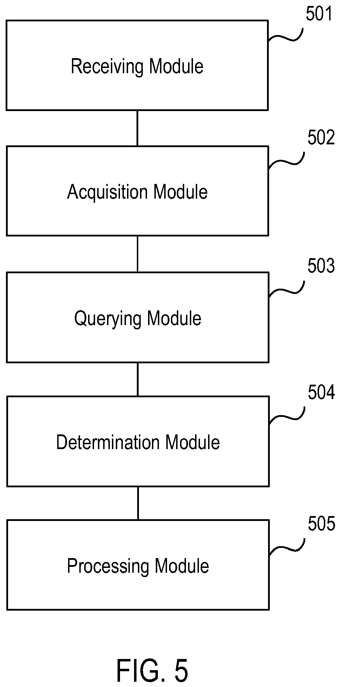

Similar to the disclosed methods for processing data blocks, an embodiment of the disclosure further provides a device for processing data blocks of a database, which is applied to a system including a storage server, a control server, and a merge server. As shown in FIG. 5, the device includes: a receiving module 501, configured to receive a log including tablet data block information that is sent by the storage server; an acquisition module 502, configured to acquire the tablet data block information included in the log when the receiving module receives the log including tablet data block information that is sent by the storage server; and a querying module 503, configured to query the merge server for tablet data block information in a corresponding root table according to the tablet data block information included in the log that is acquired by the acquisition module.

In one embodiment, the querying module is configured to: identify a table name corresponding to the tablet data block information included in the log that is acquired by the acquisition module; and query the merge server for tablet data block information in a root table corresponding to the table name.

As illustrated in FIG. 5, the device further includes a determination module 504, configured to determine whether the tablet data block information included in the log that is acquired by the acquisition module is consistent with the tablet data block information in the root table that is found by the querying module.

In one embodiment, the determination module is specifically configured to check whether one or more of the following information corresponding to a tablet data block in the root table that is found by the querying module is consistent with a tablet data block included in the log that is acquired by the acquisition module: a table name, a boundary, a location distribution, a data check code, and an index, a creation time, and a size; and when any inconsistency is found for any of the information in the checking result, determine that the tablet data block information included in the log that is acquired by the acquisition module is inconsistent with the tablet data block information in the root table that is found by the querying module.

As illustrated in FIG. 5, the device further includes a processing module 505, configured to summarize and store the tablet data block information included in the log that is acquired by the acquisition module and the tablet data block information in the root table that is found by the querying module, and send an alarm when the determination result is that the tablet data block information included in the log is inconsistent with the tablet data block information in the root table.

In one embodiment, the processing module 505 is specifically configured to: summarize the tablet data block information included in the log that is acquired by the acquisition module and the tablet data block information in the root table that is found by the querying module; and persistently save the summarized tablet data block information on a disk using table names corresponding to tablet data blocks as key values, thereby facilitating subsequent viewings of the changing status of tablet data blocks of a certain table in an OCEANBASE database during its lifetime and any subsequent automatic processing or manual processing.

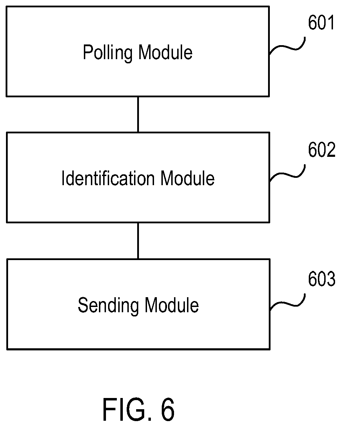

Similar to the disclosed methods for processing data blocks, an embodiment of the disclosure further provides a device for processing data blocks of a database, which is applied to a system including a storage server, a control server, and a merge server. As shown in FIG. 6, the device includes: a polling module 601, configured to poll logs of the storage server itself; an identification module 602, configured to, when the polling module determines that new data appears in the logs, identify whether the new data is tablet data block information; and a sending module 603, configured to, when an identification result of the identification module is positive, send a log including the tablet data block information to the control server, so that the control server identifies consistency between the tablet data block information included in the log and tablet data block information in a root table of the merge server (or in one of a plurality of root tables distributed across multiple devices), and summarizes and stores the information, thereby facilitating subsequent viewings of the changing status of tablet data blocks of a certain table in an OCEANBASE database during its lifetime and subsequent automatic processing or manual processing.

In view of the above, as compared with current systems, a log including tablet data block information that is generated when a tablet data block changes can be acquired and parsed in real time to obtain the tablet data block information. In this embodiment, the acquired tablet data block information and the found tablet data block information via querying are summarized and persistently stored on a disk and tablet data block information of a tablet in various states is persistently stored on the disk. It is therefore possible to achieve the goal of keeping tack of the status change of the tablet data block. On the other hand, multi-dimensional checking is performed in real time on obtained tablet data block information and tablet data block information in a root table in the disclosure; early warnings are sent in time when the checking result is that the obtained tablet data block information and the tablet data block information in the root table are inconsistent. A timely correction can be performed when tablet data blocks disorder and loss occur, thereby having high checking efficiency and accurate checking result. At the same time, because the obtained tablet data block information and the found tablet data block information in a root table via querying are summarized and persistently stored in this embodiment, complete data can then be obtained in subsequent checking, thereby improving checking accuracy and efficiency.

The modules in the apparatus of disclosure may be integrated into a single device or deployed separately. The aforementioned modules may be combined into one module or further divided into multiple submodules.

Through the preceding description of the embodiments, those skilled in the art can clearly understand that the disclosed embodiments may be implemented by software plus a necessary hardware platform and certainly may also be implemented entirely in hardware. Based on such understanding, the essence of the technical solutions of the disclosed embodiments or the part that makes contributions to existing systems may be embodied in the form of a software product. The computer software product is stored in a storage medium and includes several instructions for instructing a computer device (which may be a personal computer, a server, a network device, or the like) to perform the methods described in the embodiments. Those skilled in the art can understand that the accompanying drawings are merely schematic views of some embodiments, and modules or processes in the accompanying drawings are not necessarily required in implementing the disclosed embodiments. Those skilled in the art can understand that modules in an apparatus in an embodiment may be distributed in the apparatus of the embodiment according to the description of the embodiment, or may be correspondingly changed to be disposed in one or more apparatuses different from this embodiment. The modules in the aforementioned embodiment may be combined into one module or further divided into multiple submodules. The aforementioned sequence numbers of the embodiments are merely for the convenience of description, and do not imply the preference among the embodiments. Disclosed above are merely several embodiments of the disclosure. However, the disclosure should not be limited to these embodiments, and any of variations thereof that can be contemplated by those skilled in the art should fall within the protection scope of the disclosure.

## Claims

1. A method for processing data blocks in a distributed database comprising a plurality of storage servers, the method comprising:
acquiring, tablet data block information included in a log, wherein the tablet data block information is associated with the plurality of storage servers;
querying for tablet data block information in a corresponding root table according to the tablet data block information included in the log;
determining whether the tablet data block information included in the log is consistent with the tablet data block information in the root table; and
sending an alarm when the determining result indicates that the tablet data block information included in the log is inconsistent with the tablet data block information in the root table.

2. The method of claim 1, wherein the querying, by the control server, the merge server for tablet data block information in a corresponding root table according to the tablet data block information included in the log comprises:
identifying, by the control server, a table name corresponding to the tablet data block information included in the log; and
querying, by the control server, the merge server for tablet data block information in the root table corresponding to the table name.

3. The method of claim 1, wherein determining, by the control server, whether the tablet data block information included in the log is consistent with the tablet data block information in the root table comprises:
checking, by the control server, whether information corresponding to a tablet data block in the root table is consistent with a tablet data block included in the log, the information corresponding to a tablet data block in the root table comprising one or more of a table name, a boundary, a location distribution, a data check digit, an index, a creation time, and a size; and
when any inconsistency is found for any of the information corresponding to a tablet data block in the root table in the checking result, determining, by the control server, that the tablet data block information included in the log is inconsistent with the tablet data block information in the root table.

4. The method of claim 1, wherein summarizing and storing, by the control server, the tablet data block information included in the log and the tablet data block information in the root table comprises:
summarizing, by the control server, the tablet data block information included in the log and the tablet data block information in the root table; and
persistently saving, by the control server, summarized tablet data block information on a disk using table names corresponding to tablet data blocks as key values.

5. A control server, applied to a system comprising a storage server, a control server, and a merge server, wherein the control server comprises:
a receiving module, configured to receive a log sent by the storage server, the log including tablet data block information;
an acquisition module, configured to acquire the tablet data block information included in the log when the receiving module receives the log including tablet data block information sent by the storage server;
a querying module, configured to query the merge server for tablet data block information in a corresponding root table according to the tablet data block information included in the log that is acquired by the acquisition module;
a determination module, configured to determine whether the tablet data block information included in the log that is acquired by the acquisition module is consistent with the tablet data block information in the root table that is found by the querying module; and
a processing module, configured to summarize and store the tablet data block information included in the log that is acquired by the acquisition module and the tablet data block information in the root table that is found by the querying module, and send an alarm when the determining result indicates that the tablet data block information included in the log is inconsistent with the tablet data block information in the root table.

6. The control server of claim 5, wherein the querying module is specifically configured to:
determine a table name corresponding to the tablet data block information included in the log that is acquired by the acquisition module; and
query the merge server for tablet data block information in a root table corresponding to the table name.

7. The control server of claim 5, wherein the determination module comprises:
check whether information corresponding to a tablet data block in the root table that is found by the querying module is consistent with a tablet data block included in the log that is acquired by the acquisition module, the information corresponding to a tablet data block in the root table comprising one or more of a table name, a boundary, a location distribution, a data check digit, and an index, a creation time, and a size; and
when any inconsistency is found for any of the information corresponding to a tablet data block in the root table in the checking result, determine that the tablet data block information included in the log that is acquired by the acquisition module is inconsistent with the tablet data block information in the root table that is found by the querying module.

8. The control server of claim 5, wherein the processing module if further configured to:
summarize the tablet data block information included in the log that is acquired by the acquisition module and the tablet data block information in the root table that is found by the querying module; and
persistently save summarized tablet data block information on a disk using table names corresponding to tablet data blocks as key values.

9. A method for processing data blocks, applied to a system comprising a storage server, a control server, and a merge server, the method comprising:
polling, by the storage server, one or more logs;
when the storage server determines that new data appears in the logs, identifying whether the new data is tablet data block information; and
if the new data is tablet data block information, sending, by the storage server, a log including the tablet data block information to the control server, wherein the control server is configured to identify consistency between the tablet data block information included in the log and tablet data block information in a root table of the merge server, and summarize and store the information.

10. A storage server, applied to a system comprising a storage server, a control server, and a merge server, wherein the storage server comprises:
a polling module, configured to poll logs of the storage server;
an identification module, configured to, when the polling module determines that new data appears in the logs, identify whether the new data is tablet data block information; and
a sending module, configured to, when an identification result of the identification module is positive, send a log including the tablet data block information to the control server, so that the control server identifies consistency between the tablet data block information included in the log and tablet data block information in a root table of the merge server and summarizes and stores the information.
